# EUROPÄISCHE PATENTSCHRIFT

(11) **EP 4 018 822 B1**
(45) Veröffentlichungstag und Bekanntmachung des Hinweises auf die Patenterteilung: **21.06.2023**
(21) Anmeldenummer: 21213575.0
(22) Anmeldetag: 10.12.2021
(51) Int. Cl.: A01K 1/015

(54) **LAUFGANGAUFLAGE**
WALKWAY SURFACE
TAPIS D'ALLÉE

(30) Priorität: 22.12.2020 DE 102020134549
(43) Veröffentlichungstag der Anmeldung: 29.06.2022
(73) Patentinhaber: Gummiwerk KRAIBURG Elastik GmbH & Co. KG, 84529 Tittmoning (DE)
(72) Erfinder: Klinger, Martin, Garching an der Alz (DE); Steinberger, Georg, Polling (DE); Anker, Catrin, Langkampfen (AT); Steinberger, Rupert, Polling (DE)
(74) Vertreter: Ruttensperger Lachnit Trossin Gomoll

(56) Entgegenhaltungen:
- DE-A1-102012 209 972
- Unknown: "BELMONDO Gummibeläge für Pferdehaltung", , 28. Februar 2018 (2018-02-28), Seiten 1-32, XP055914106, Gefunden im Internet: URL:https://stalleinrichtung-goldbach.de/B ELMONDO_Prospekt_2018_A4_0218_DE.pdf [gefunden am 2022-04-20]

## Beschreibung

Die vorliegende Erfindung betrifft eine Laufgangauflage für den Laufgang in einem Tierstall.

Aus der DE 10 2017 117 099 A1 und der DE 10 2012 209972 A1 sind Laufgänge für einen Tierstall mit einem mit Betonmaterial aufgebauten Laufganguntergrund bekannt. In einem zentralen Bereich des Laufgangs ist eine zum Ableiten von Tierausscheidungen vorgesehene Ableitrinne gebildet. Beidseits der Ableitrinne stellt der Laufganguntergrund jeweils einen Laufgangbereich mit einem an die Ableitrinne angrenzenden ersten Laufgangbereich-Seitenrandbereich und einem an einen jeweils seitlich neben dem Laufgang vorgesehenen Tieraufenthaltsbereich angrenzenden zweiten Laufgangbereich-Seitenrandbereich bereit. In den beiden Laufgangbereichen sind in der Laufganglängsrichtung aufeinanderfolgend angeordnete, mattenartige Laufgangauflagen gemäß dem Oberbegriff des Anspruchs 1 vorgesehen, welche in Richtung zur Ableitrinne geneigt verlaufende Tierauftrittsflächen bereitstellen. Im Bereich des Laufgangs auf den Laufgangauflagen sich ansammelnde Tierausscheidungen können durch einen in der Laufgang-Längsrichtung bewegbaren Räumschild entfernt werden. Insbesondere flüssige Tierausscheidungen können sich aufgrund der Neigung der Tierauftrittsflächen der Laufgangauflagen in der Ableitrinne sammeln und über diese abgeleitet werden. Die Laufgangauflagen sind aus elastisch verformbaren Material aufgebaut und weisen an einer dem Laufganguntergrund zugewandten Auflageseite eine Struktur von eine Auflagefläche bereitstellenden, zueinander im Wesentlichen orthogonalen und sich im Wesentlichen diagonal über die Laufgangauflagen hinweg erstreckenden ersten und zweiten Auflagestegen auf. Es ist die Aufgabe der vorliegenden Erfindung, eine stabil aufgebaute, einen hohen Komfort für Tiere bereitstellende Laufgangauflage für einen Laufgang in einem Tierstall vorzusehen.

Gemäß der vorliegenden Erfindung wird diese Aufgabe gelöst durch eine Laufgangauflage für einen Laufgang in einem Tierstall gemäß Anspruch 1, wobei der Laufgang einen Laufganguntergrund mit wenigstens einem in einer Laufgang-Längsrichtung sich erstreckenden Laufgangbereich mit einem an einen Ableitrinnenbereich angrenzenden ersten Laufgangbereich-Seitenrandbereich und einem vorzugsweise an einen Tieraufenthaltsbereich angrenzenden zweiten Laufgangbereich-Seitenrandbereich aufweist, wobei die Laufgangauflage einen Auflagekörper mit einem im Wesentlichen in einer Auflagekörper-Querrichtung sich erstreckenden ersten Auflagekörper-Seitenrandbereich und einem im Wesentlichen in der Auflagekörper-Querrichtung sich erstreckenden zweiten Auflagekörper-Seitenrandbereich sowie zwischen den Auflagekörper-Seitenrandbereichen im Wesentlichen in einer Auflagekörper-Längsrichtung sich erstreckenden Auflagekörper-Längsrandbereichen aufweist, wobei der Auflagekörper an einer Tierauftrittsseite eine Tierauftrittsfläche aufweist und an einer von der Tierauftrittsseite abgewandten Auflageseite des Auflagekörpers eine Auflageformation mit einer Auflagefläche zur Auflage auf einem Laufgangbereich vorgesehen ist, wobei ein Abstand der Auflagefläche von der Tierauftrittsfläche vom ersten Auflagekörper-Seitenrandbereich zum zweiten Auflagekörper-Seitenrandbereich zunimmt, wobei die Auflageformation eine Mehrzahl von mit Abstand zueinander sich erstreckenden ersten Auflagestegen umfasst, wobei an wenigstens einem Teil der ersten Auflagestege, vorzugsweise an jedem ersten Auflagesteg, ein Teil der Auflagefläche bereitgestellt ist, wobei in zwischen einander benachbarten ersten Auflagestegen gebildeten Zwischenräumen eine Mehrzahl von zu den ersten Auflagestegen quer verlaufenden zweiten Auflagestegen vorgesehen ist, wobei in einander benachbarten Zwischenräumen vorgesehene zweite Auflagestege zueinander in einer Erstreckungsrichtung der ersten Auflagestege versetzt sind.

Die an der Auflageseite vorgesehene Struktur von ersten und zweiten Auflagestegen sorgt für eine stabile, gleichmäßige Auflage auf dem Laufganguntergrund, gibt der Laufgangauflage jedoch ausreichend Stabilität, dass diese bei Belastung durch Tiere zwar nachgeben kann, jedoch nicht in derartigem Ausmaß, so dass dies zu einer Beschädigung der Laufgangauflage oder zu einem unsicheren Auftritt für die Tiere führen kann. Durch den zunehmenden Abstand zwischen der Auflageseite und der Tierauftrittsfläche wird in die Laufgangauflage ein Gefälle quer zur Laufgangauflage-Längsrichtung und damit auch der Laufgang-Längsrichtung eines mit einer derartigen Laufgangauflage ausgestatteten Laufgangs integriert. Bei Positionierung einer derartigen Laufgangauflage auf einem Laufganguntergrund, der im wesentlichen keine Gefälle bereitstellt, wird durch die Laufgangauflage selbst ein derartiges Gefälle erzeugt, so dass auf der Tierauftrittsfläche sich ansammelnde Tierausscheidungen, insbesondere flüssige Tierausscheidungen, sich verstärkt in Richtung des Gefälles und damit auf die Ableitrinne zu bewegen werden.

Zur Erreichung einer homogenen Nachgiebigkeit der Laufgangauflage ist bevorzugt, dass eine Mehrzahl der, besonders bevorzugt mehr als die Hälfte der, stärker bevorzugt im Wesentlichen alle oder alle, ersten Auflagestege sich im Wesentlichen parallel zueinander erstrecken. Insbesondere ist erfindungsgemäß vorgesehen, dass eine Mehrzahl der, besonders bevorzugt mehr als die Hälfte der, stärker bevorzugt im Wesentlichen alle oder alle, ersten Auflagestege sich zwischen den Auflagekörper-Längsrandbereichen erstrecken. Um verstärkt zur Homogenität der Nachgiebigkeit der Laufgangauflage beizutragen, verbindet jeder erster Auflagesteg aus der einen Mehrzahl, besonders bevorzugt aus mehr als der Hälfte, der ersten Auflagestege, stärker bevorzugt ein jeder erster Auflagesteg, die Auflagekörper-Längsrandbereiche miteinander, bevorzugt jeweils als ein durchgehender Steg, welcher sich im Wesentlichen entlang einer Geraden erstrecken kann.

Um die Auflagewechselwirkung mit dem Laufganguntergrund über die gesamte durch eine jeweilige Laufgangauflage abgedeckte Fläche noch gleichmäßiger zu verteilen, ist an wenigstens einem Teil der zweiten Auflagestege, vorzugsweise jedem zweiten Auflagesteg, ein Teil der Auflagefläche bereitgestellt. Grundsätzlich könnten aber auch einige der zweiten Auflagestege oder Teile einzelner zweiter Auflagestege so geformt sein, dass sie nicht oder nur bei Belastung durch ein Tier in Anlage an dem Laufganguntergrund kommen.

Ferner wird eine gleichmäßige Auflagewechselwirkung dadurch unterstützt, dass die zweiten Auflagestege sich im Wesentlichen orthogonal zu den ersten Auflagestegen erstrecken, oder/und dass die ersten Auflagestege sich im Wesentlichen in einer Richtung von Auflagekörper-Querrichtung und Auflagekörper-Längsrichtung, vorzugsweise im Wesentlichen in der Auflagekörper-Querrichtung, erstrecken und die zweiten Auflagestege sich im Wesentlichen in der anderen Richtung von Auflagekörper-Querrichtung und Auflagekörper-Längsrichtung, vorzugsweise im Wesentlichen in der Auflagekörper-Längsrichtung, erstrecken.

Auch eine Anordnung, bei welcher in einander benachbarten Zwischenräumen angeordnete zweite Auflagestege zu in der Erstreckungsrichtung der ersten Auflagestege benachbarten zweiten Auflagestegen den gleichen Abstand aufweisen, führt zu einer gleichmäßig verteilten Auflagewechselwirkung zwischen einer jeweiligen Laufgangauflage und dem Laufganguntergrund.

Ferner kann vorgesehen sein, dass im Wesentlichen alle zweiten Auflagestege zu in der Erstreckungsrichtung der ersten Auflagestege benachbarten zweiten Auflagestegen den gleichen Abstand aufweisen, oder/und dass in einander benachbarten Zwischenräumen angeordnete zweite Auflagestege zueinander um die Hälfte des Abstandes zwischen in der Erstreckungsrichtung der ersten Auflagestege benachbarten zweiten Auflagestegen versetzt sind, oder/und dass in jedem zweiten Zwischenraum angeordnete zweite Auflagestege in einer Erstreckungsrichtung der zweiten Auflagestege quer zur Erstreckungsrichtung der ersten Auflagestege im Wesentlichen auf geradlinig sich erstreckenden Auflagesteglinien liegen und sich in Richtung der Auflagesteglinien erstrecken. Durchläuft eine der sich geradlinig erstreckenden Auflagesteglinien zwei benachbarte Zwischenräume, so liegt bevorzugt nur in einem von diesen zwei benachbarten Zwischenräumen einer der zweiten Auflagestege auf dieser einen der sich geradlinig erstreckenden Auflagesteglinien und in dem anderen der zwei benachbarten Zwischenräume liegt auf dieser der sich geradlinig erstreckenden Auflagesteglinien kein zweiter Auflagesteg. Vorzugsweise ist diese Anordnung der zweiten Auflagestege in benachbarten Zwischenräumen relativ zu einer diese benachbarten Zwischenräume durchlaufenden Auflagesteglinie in einer Mehrzahl, bevorzugt in mehr als der Hälfte, dieser benachbarten Zwischenräume, besonders bevorzugt in im Wesentlichen allen oder in allen, diesen benachbarten Zwischenräumen zu finden. Diese Anordnung kann bei Betrachtung einer der, bevorzugt einer Mehrzahl der, besonders bevorzugt mehr als der Hälfte der, stärker bevorzugt im Wesentlichen aller oder aller, Auflagesteglinien, die benachbarte Zwischenräume durchlaufen, vorliegen. All diese Maßnahmen tragen einzelnen und in Kombination dazu bei, dass die erfindungsgemäß aufgebaute Laufgangauflage ungeachtet der Dickenvariation derselben über die gesamte Fläche hinweg im Wesentlichen gleichmäßig bezüglich des Laufganguntergrunds abgestützt ist und einen stabilen Auftritt für Tiere gewährleistet.

Hierzu kann auch vorgesehen sein, dass im Wesentlichen alle ersten Auflagestege zu dazu benachbarten ersten Auflagestegen im Wesentlichen den gleichen Abstand aufweisen.

Um bei gleichwohl ermöglichter Verformbarkeit der Laufgangauflage die Trittsicherheit für Tiere zu erhöhen, wird vorgeschlagen, dass jeweils zwei einander benachbarte erste Auflagestege und zwei einander benachbarte zweite Auflagestege zur Auflageseite offene Verformungsfelder begrenzen, welche jeweils eine im Wesentlichen rechteckige Umfangskontur aufweisen. Die rechteckige Umfangskontur ist bevorzugt nicht quadratförmig und/oder sie weist zwei unterschiedlich lange, im Wesentlichen unter 90 Grad angeordnete benachbarte Seiten auf. Bei Erhöhung der Verformbarkeit der Laufgangauflage werden üblicherweise die Verformungsfelder bzw. die Flächeninhalte der die jeweiligen Verformungsfelder überdeckenden Abschnitte der Tierauftrittsfläche vergrößert, wobei diese Abschnitte der Tierauftrittsfläche im Folgenden als Verformungsabschnitte bezeichnet werden. Gerade bei Verformungsfeldern mit quadratischer Umfangskontur können ab einer gewissen Größe des Verformungsabschnitts Tiere mit dem gesamten Huf im Innenbereich des einzelnen Verformungsfeldes in der Tierauftrittsfläche einsinken, was die Trittsicherheit des Tieres verringert. Wird bei gleichbleibendem Flächeninhalt des Verformungsabschnitts eine rechteckige, und dabei bevorzugt nicht quadratische, Umfangskontur des Verformungsfelds gewählt, so tritt das Tier mit signifikant erhöhter Wahrscheinlichkeit auf mindestens einen, bevorzugt mindestens zwei, der ersten oder/und zweiten Auflagestege auf, was dem Tier beim Auftreten eine stabile Hufpositionierung ermöglicht und somit die Trittsicherheit erhöht. Die nicht direkt durch darunterliegende erste oder/und zweite Auflagestege abgestützten Bereiche der Tierauftrittsfläche, also bevorzugt die Verformungsabschnitte, bieten dem auftretenden Tier einen weichen und somit Naturbodenverhältnisse simulierenden Auftrittsuntergrund, was zum Tierwohl beiträgt. Die vorangehend beschriebene Vorsehung von Verformungsfeldern mit im Wesentlichen rechteckiger Umfangskontur, welche vorzugsweise nicht quadratförmig und/oder welche unterschiedlich lange, im Wesentlich unter 90 Grad angeordnete benachbarte Seiten aufweist, ist besonders bei Verwendung der Laufgangauflage durch Paarhufer wie Rinder oder Schweine vorteilhaft, da deren Hufe zwei Zehen aufweisen, von welchen beide mit erhöhter Wahrscheinlichkeit beim Auftreten durch einen ersten oder/und zweiten Auflagesteg direkt gestützt werden.

Um bei gleichwohl ermöglichter Verformbarkeit der Laufgangauflage deren Stabilität weiter erhöhen zu können, wird vorgeschlagen, dass jeweils zwei einander benachbarte erste Auflagestege und zwei einander benachbarte zweite Auflagestege zur Auflageseite offene Verformungsfelder begrenzen, und dass in wenigstens einem Teil der Verformungsfelder, vorzugsweise der Mehrzahl der Verformungsfelder, am meisten bevorzugt jedem Verformungsfeld, eine Versteifungsstruktur vorzugsweise mit wenigstens einem Versteifungssteg vorgesehen ist.

Um in einem jeweiligen Verformungsfeld ein zu starkes Durchdrücken bei Belastung durch ein Tier zu vermeiden, kann die Versteifungsstruktur wenigstens einen zwischen den beiden ein zugeordnetes Verformungsfeld begrenzenden zweiten Auflagestegen verlaufenden, vorzugsweise an diese anschließenden ersten Versteifungssteg umfassen, oder/und kann die Versteifungsstruktur wenigstens einen, vorzugsweise zwei zwischen den beiden ein zugeordnetes Verformungsfeld begrenzenden ersten Auflagestegen verlaufende, vorzugsweise an diese anschließende zweite Versteifungsstege umfassen. In einer bevorzugten Ausführungsform mit verbesserter Homogenität der Verformbarkeit der Laufgangauflage können der wenigstens eine Versteifungssteg, oder/und der wenigstens eine zweite Versteifungssteg, vorzugsweise die wenigstens zwei zweiten Versteifungsstege, das zugeordnete Verformungsfeld in im Wesentlichen gleich große Abschnitte unterteilen, welche vorzugsweise jeweils eine quadratische Umfangskontur aufweisen.

Dabei kann der wenigstens eine erste Versteifungssteg sich im Wesentlichen parallel zu den das zugeordnete Verformungsfeld begrenzenden ersten Auflagestegen erstrecken, oder/und kann der wenigstens eine zweite Versteifungssteg sich im Wesentlichen parallel zu den das zugeordnete Verformungsfeld begrenzenden zweiten Auflagestegen erstrecken.

Um durch die Versteifungsstruktur die Verformbarkeit der Laufgangauflage nicht übermäßig zu beeinträchtigen, wird vorgeschlagen, dass an wenigstens einem Versteifungssteg der Versteifungsstruktur, vorzugsweise an jedem Versteifungssteg, kein Teil der Auflagefläche gebildet ist. Dies bedeutet, dass ein derartiger keinen Teil der Auflagefläche bildender Versteifungssteg an der Auflageseite in Richtung zum Laufganguntergrund kürzer ausgestaltet ist, also weniger weit hervorsteht, als die einen Teil der Auflagefläche bildenden Auflagestege.

Für einen stabilen Zusammenhalt von in der Laufganglängsrichtung aufeinander folgend angeordneten Laufgangauflagen kann an jedem Auflagekörper-Längsrandbereich ein vorzugsweise schwalbenschwanzartiges Eingriffsprofil zum Eingriff mit einem Eingriffsprofil einer unmittelbar benachbart anzuordnenden Laufgangauflage vorgesehen sein.

Zum Erhöhen der Trittsicherheit und des Komforts für auf einem erfindungsgemäßen Auflagekörper sich bewegende oder stehende Tieren wird vorgeschlagen, dass wenigstens der Auflagekörper elastisch verformbar ist. Somit kann insbesondere dort, wo der Auflagekörper an seiner Tierauftrittsfläche durch ein Tier belastet wird, der Belastungsbereich leicht einsinken, ähnlich wie dies bei auf einer Wiese oder ähnlich weichem Untergrund in hügeligem Gelände stehenden Tieren der Fall ist. Hierzu kann beispielsweise der Auflagekörper oder/und die Auflageformation mit vorzugsweise durch Recycling gewonnenem Gummimaterial aufgebaut sein. Derartiges Aufbaumaterial zeichnet sich auch durch seine hohe Resistenz gegen Tierausscheidungen und seine hervorragende Haltbarkeit aus. Zur Erhöhung der Trittfestigkeit können in einen die Tierauflagefläche bereitstellenden Bereich des Auflagekörpers haftungsverbessernde Partikel, vorzugsweise Korundmaterial, in das Aufbaumaterial des Auflagekörpers eingebettet sein.

Aus Stabilitätsgründen wird vorgeschlagen, dass der Auflagekörper mit der Auflageformation einstückig ausgebildet ist. Bei einer hinsichtlich der Variabilität im Aufbau besonders vorteilhaften, alternativen Ausgestaltung kann vorgesehen sein, dass die Auflageformation an einem von dem Auflagekörper getrennt ausgebildeten Auflageformationskörper bereitgestellt ist. Dabei kann zum Bereitstellen des Gefälles der Auflageformationskörper im Wesentlichen in der Auflagekörper-Längsrichtung keilartig ausgebildet sein.

Die vorliegende Erfindung betrifft ferner einen Laufgang für einen Tierstall, umfassend einen Laufganguntergrund mit wenigstens einem in einer Laufgang-Längsrichtung sich erstreckenden Laufgangbereich mit einem an einen Ableitrinnenbereich angrenzenden ersten Laufgangbereich-Seitenrandbereich und einem vorzugsweise an einen Tieraufenthaltsbereich angrenzenden zweiten Laufgangbereich-Seitenrandbereich, wobei auf wenigstens einem Laufgangbereich wenigstens eine erfindungsgemäß ausgestaltete Laufgangauflage derart positioniert ist, dass der erste Auflagekörper-Seitenrandbereich über dem ersten Laufgangbereich-Seitenrandbereich positioniert ist und der zweite Auflagekörper-Seitenrandbereich über dem zweiten Laufgangbereich-Seitenrandbereich positioniert ist.

Die vorliegende Erfindung wird nachfolgend mit Bezug auf die beiliegenden Figuren detailliert beschrieben. Es zeigt:
- Fig. 1: einen mit einer Laufgangauflage ausgestatteten Laufgang für einen Tierstall;
- Fig. 2: eine Stirnansicht des Laufgangs der in Fig. 1;
- Fig. 3: eine perspektivische Ansicht einer Laufgangauflage, betrachtet von ihrer Tierauftrittsseite;
- Fig. 4: eine perspektivische Ansicht einer Laufgangauflage, betrachtet von ihrer Auflageseite;
- Fig. 5: eine Draufsicht einer Laufgangauflage, betrachtet von ihrer Auflageseite;
- Fig. 6: eine perspektivische Detailansicht der Laufgangauflage, betrachtet von ihrer Auflageseite;
- Fig. 7: eine perspektivische Ansicht einer alternativ ausgestalteten Laufgangauflage.

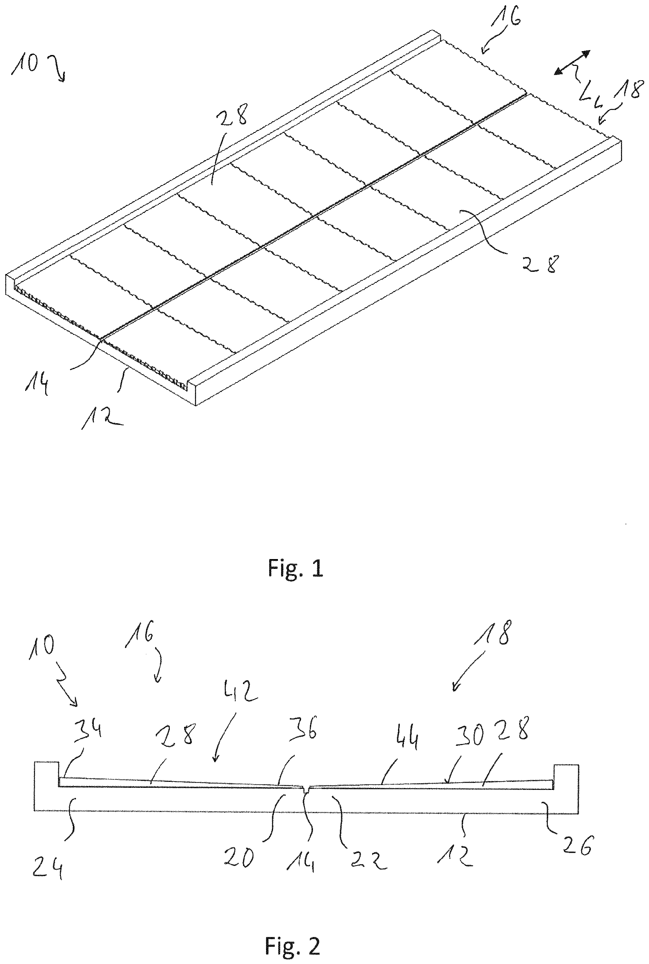

Die Fig. 1 und 2 zeigen einen allgemein mit 10 bezeichneten Laufgang für einen Tierstall, beispielsweise für Rinder. Der Laufgang 10 ist in einer Laufgang-Längsrichtung L_{L} langgestreckt und weist einen beispielsweise mit Betonmaterial aufgebauten Laufganguntergrund 12 auf. In einem zentralen Bereich des Laufganguntergrunds 12 ist eine Ableitrinne 14 gebildet, in welcher insbesondere flüssige Tierausscheidungen sich sammeln können und über diesen zu beispielsweise in jeweiligen Endbereichen des Laufgangs 10 vorgesehenen Sammelstellen geleitet werden können.

Der Laufganguntergrund 12 stellt beidseits der Ableitrinne 14 Laufgangbereiche 16, 18 bereit, wobei jeder Laufgangbereich 16, 18 einen an die Ableitrinne 14 bzw. einen diese umfassenden Ableitrinnenbereich einen ersten Laufgang-Seitenrandbereich 20, 22 aufweist an seinem von der Ableitrinne 14 entfernten und beispielsweise an einen Tieraufenthaltsbereich, wie z. B. Liegeboxen oder dergleichen, angrenzenden zweiten Laufgang-Seitenrandbereich 24, 26 aufweist. Im Übergang zu einem derartigen Tieraufenthaltsbereich, wie z. B. Liegeboxen oder dergleichen, kann in dem jeweiligen zweiten Laufgangbereich-Seitenwandbereichen 24, 26 der Laufganguntergrund 12 stufenartig ansteigen, um ein Eindringen von Tierausscheidungen in einen jeweiligen Tieraufenthaltsbereich aus dem Laufgang 10 zu verhindern. In den Laufgangbereichen 16, 18 ist der Laufganguntergrund 12 mit einer im Wesentlichen horizontalen, zur Ableitrinne 14 im Wesentlichen nicht geneigten Oberfläche ausgebildet.

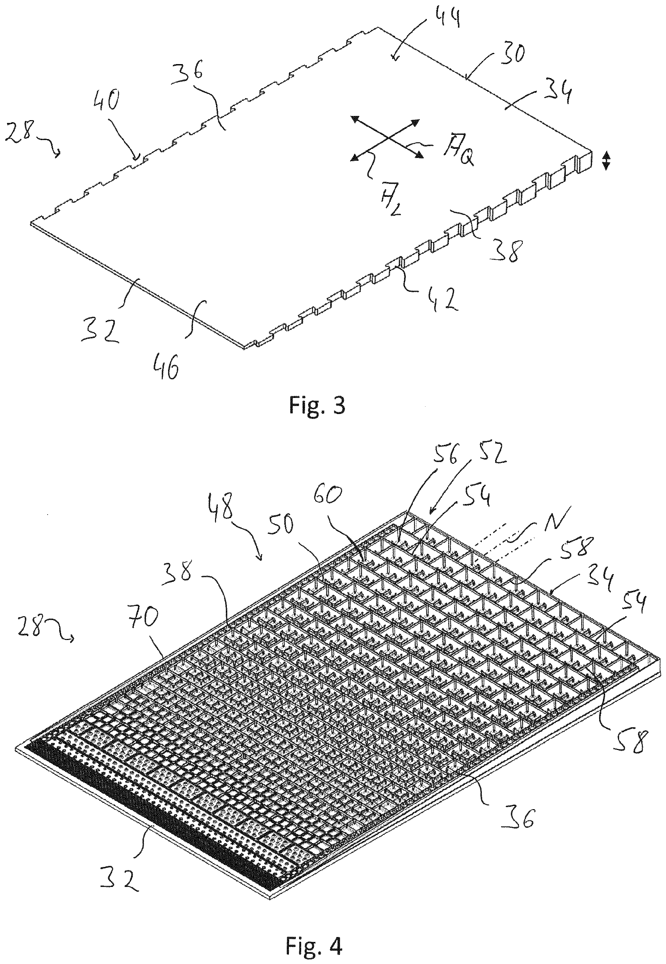

In jedem der Laufgangbereiche 16, 18 ist auf dem Laufganguntergrund 12 eine bzw. eine Mehrzahl von Laufgangauflagen 28 positioniert. Die nachfolgend mit Bezug auf die Fig. 3 bis 6 detaillierter beschriebenen Laufgangauflagen 28 sind jeweils mit einem Auflagekörper 30 ausgebildet, der einen über den ersten Laufgangbereich-Seitenrandbereich 20 bzw. 22 positionierten ersten Auflagekörper-Seitenrandbereich 32 sowie einen über dem jeweiligen zweiten Laufgang-Seitenrandbereich 24 bzw. 26 positionierten zweiten Auflagekörper-Seitenrandbereich 34 aufweist. Die beiden Auflagekörper-Seitenrandbereiche 32, 34 erstrecken sich im Wesentlichen in einer Auflagekörper-Querrichtung A_{Q}, welche bei Positionierung einer derartigen Laufgangauflage 28 im Laufgang 10 im Wesentlichen der Laufgang-Längsrichtung L_{L} entspricht.

Zwischen den beiden Auflagekörper-Seitenrandbereichen 32, 34 erstrecken sich Auflagekörper-Längsrandbereiche 36, 38 in einer zur Auflagekörper-Querrichtung A_{Q} im Wesentlichen orthogonalen Auflagekörper-Längsrichtung A_{L}. Eine derartige Laufgangauflage 28 bzw. deren Auflagekörper 34 weist somit eine im Wesentlichen rechteckige Umfangskontur auf, wobei die Erstreckungslänge in der Auflagekörper-Längsrichtung A_{L} größer ist bzw. sein kann, als die Erstreckungslänge in der Auflagekörper-Querrichtung A_{Q}.

In Fig. 3 ist deutlich zu erkennen, dass in jedem der Auflagekörper-Längsrandbereiche 36, 38 die Laufgangauflage 28 mit zueinander jeweils komplementären Eingriffsprofilen 40, 42 ausgebildet ist, die beispielsweise eine Schwalbenschwanzprofilierung bereitstellen können, so dass das in einem jeweiligen Auflagekörper-Längsrandbereich 36 vorgesehene Eingriffsprofil 40 in Eingriff stehen bzw. gebracht werden kann mit dem am Auflagekörper-Längsrandbereich 38 vorgesehenen Eingriffsprofil 42 einer unmittelbar benachbarten Laufgangauflage 28. Es wird somit ein in der Laufgang-Längsrichtung L_{L} formschlüssiger Zusammenhalt der in einem jeweiligen Laufgangbereich 16, 18 nebeneinander positionierten Laufgangauflagen 28 erreicht. Zur festen Anbindung an den Laufganguntergrund 12 können die Laufgangauflagen 28 beispielsweise durch bolzen- oder schraubenartige Befestigungsorgane an den Laufganguntergrund 12 angebunden werden.

In den Figuren ist deutlich zu erkennen, dass die Laufgangauflagen 28 in der Auflagekörper-Längsrichtung A_{L} mit variierender Dicke D, also variierendem Abstand zwischen einer an einer Tierauftrittsseite 44 gebildeten Tierauftrittsfläche 46 und einer an einer Auflageseite 48 in nachfolgend beschriebener Art und Weise gebildeten Auflagefläche 50, ausgebildet ist, die in Richtung vom ersten Auflagekörper-Seitenrandbereich 32 zum zweiten Auflagekörper-Seitenrandbereich 34 zunimmt. Beispielsweise kann die Dicke D bzw. der Abstand zwischen der Tierauftrittsfläche 46 und der Auflagefläche 50 im Wesentlichen kontinuierlich und konstant zunehmen, so dass die Laufgangauflage 28 eine grundsätzlich keilartige Struktur aufweist. Bei im Wesentlichen horizontal positionierter Oberfläche des die Laufgangauflagen 28 aufnehmenden Laufganguntergrunds 12 wird somit durch die beispielsweise keilartig geformten Laufgangauflagen 28 eine Gefälle in jeden der Laufgangbereiche 16, 18 integriert, so dass insbesondere flüssige Tierausscheidungen in Richtung zur Ableitrinne 14 und somit auch in Richtung von den Tieraufenthaltsbereichen weg geleitet werden.

An der Auflageseite 48 der Laufgangauflage 28 bzw. des Auflagekörpers 30 derselben ist eine allgemein mit 52 bezeichnete Auflageformation vorgesehen, welche im Wesentlichen auch die Auflagefläche 50 bereitstellt. Die Auflageformation 52 umfasst eine Mehrzahl von in der Auflagekörper-Querrichtung A_{Q} sich erstreckenden ersten Auflagestegen 54. Zwischen jeweils zwei in der Auflagekörper-Längsrichtung A_{L} aufeinanderfolgenden und in der Auflagekörper-Querrichtung A_{Q} sich erstreckenden ersten Auflagestegen 54 sind Zwischenräume 56 gebildet. Da die einander unmittelbar benachbarten ersten Auflagestege 54 vorzugsweise in ihrer gesamten Erstreckungslänge in der Auflagekörper-Querrichtung A_{Q} einen im Wesentlichen gleichen Abstand zueinander aufweisen, weisen auch die Zwischenräume 56 in der Auflagekörper-Querrichtung A_{Q} eine näherungsweise konstante Breite auf.

Es ist darauf hinzuweisen, dass dann, wenn im Sinne der vorliegenden Erfindung von der Erstreckungsrichtung von Stegen die Rede ist, damit jeweils diejenige Richtung angesprochen ist, in welcher die Stege sich im Wesentlichen parallel zu der Tierauftrittsfläche 46 bzw. der Auflagefläche 50 erstrecken. Gleichwohl erstrecken derartige Stege sich auch am Auflagekörper 30 in Richtung zur Auflageseite 48. In dieser Erstreckungsrichtung können die verschiedenen Stege beispielsweise eine in Richtung zur Auflageseite 48 hin abnehmende Breite aufweisen, wodurch einerseits das Verformungsverhalten beeinflusst werden kann und andererseits eine für den Herstellungsvorgang derartiger Laufgangauflagen 28 vorteilhafte Entformungsschräge gebildet wird.

In den Zwischenräumen 56 zwischen den im Wesentlichen zwischen den beiden Auflagekörper-Längsrandbereichen 36, 38 sich im Wesentlichen parallel zueinander erstreckenden ersten Auflagestegen 54 sind quer, vorzugsweise im Wesentlichen orthogonal zu den ersten Auflagestegen 54 sich erstreckende zweite Auflagestege 58 vorgesehen. Einige der, vorzugsweise alle, ersten Auflagestege 54 können die beiden Auflagekörper-Längsrandbereiche 36, 38 miteinander als durchgehende Stege entlang einer Geraden verbinden. Die in einem jeweiligen Zwischenraum 56 angeordneten zweiten Auflagestege 58 weisen zu im selben Zwischenraum 56 angeordneten, benachbarten zweiten Auflagestegen 58 gleiche Abstände auf, so dass durch die einen jeweiligen Zwischenraum 56 begrenzenden ersten Auflagestege 54 und die in einem derartigen Zwischenraum 56 vorgesehenen zweiten Auflagestege 58 jeweilige zur Auflageseite 48 offene Verformungsfelder 60 umgrenzt sind. Die Verformungsfelder 60 weisen eine im Wesentlichen rechteckige Umfangskontur, welche vorzugsweise nicht quadratisch ist, auf und sind in Umfangsrichtung aufgrund des Umstandes, dass vorzugsweise die zweiten Auflagestege 58 an die benachbarten ersten Auflagestege 54 anschließen, in Umfangsrichtung vollständig umschlossen bzw. jeweils durch zwei erste Auflagestege 54 und zwei zweite Auflagestege 58 vollständig umgrenzt.

Zum Bereitstellen einer über die gesamte Auflageseite 48 im Wesentlichen gleichmäßigen Abstützwirkung stellen sowohl die ersten Auflagestege 54 als auch die zweiten Auflagestege 58 mit ihren zur Auflageseite 48 jeweils weisenden Scheitelbereichen einen wesentlichen Teil der gesamten Auflagefläche 50 bereit. Eine bei Belastung durch Tiere sehr gleichmäßige Abstützwirkung und somit auch Verformung der Laufgangauflage 28 wird weiter dadurch unterstützt, dass die in unmittelbar benachbarten Zwischenräumen 56 angeordneten zweiten Auflagestege 58 in der Erstreckungsrichtung der ersten Auflagestege 54, im dargestellten Ausgestaltungsbeispiel also in der Auflagekörper-Querrichtung A_{Q}, zueinander versetzt sind. Der Versatz kann dabei der Hälfte des Abstandes, beispielsweise gemessen an der Breitenmitte jeweiliger Scheitelbereiche der zweiten Auflagestege 58, einander in einen jeweiligen Zwischenraum 56 benachbarter zweiter Auflagestege 58 entsprechen, so dass die in jedem zweiten Zwischenraum angeordneten zweiten Auflagestege 58 Auflagesteglinien definieren, welche sich im Wesentlichen geradlinig in der Auflagekörper-Längsrichtung A_{L} erstrecken. Aufgrund des Versatzes der zweiten Auflagestege 58 in unmittelbar benachbarten Zwischenräumen 56 wird somit eine Schar von Auflagesteglinien N definiert, deren gegenseitiger Abstand in der Auflagekörper-Querrichtung der Hälfte des Abstandes einander benachbarter zweiter Auflagestege 58 in einem jeweiligen Zwischenraum 56 entspricht. Dies bedeutet, dass eine sehr dichte, gleichwohl gleichmäßig verteilte Struktur von durch jeweilige zweite Auflagestege 58 definierten Auflagebereichen bezüglich des Laufganguntergrunds 12 erreicht wird. Dies gewährleistet auch unter Berücksichtigung des Umstandes, dass die Laufgangauflage 28 eine in der Auflagekörper-Längsrichtung A_{L} variierende Dicke D aufweist, welche im Wesentlichen auch dadurch erreicht wird, dass die Vorsprungshöhe der ersten und zweiten Auflagestege 54, 58 von dem ersten Auflagekörper-Seitenrandbereich 32 zum zweiten Auflagekörper-Seitenrandbereich 34 hin zunimmt, ein sehr gleichförmiges Verformungsverhalten der Laufgangauflage 28 erreicht wird. Ein die Tierauftrittsfläche 46 bereitstellender, im Wesentlichen plattenartiger Abschnitt 68 des Auflagekörpers 34 kann dabei in der Auflagekörper-Längsrichtung A_{L} und auch der Auflagekörper-Querrichtung A_{Q} eine näherungsweise gleichbleibende Dicke aufweisen.

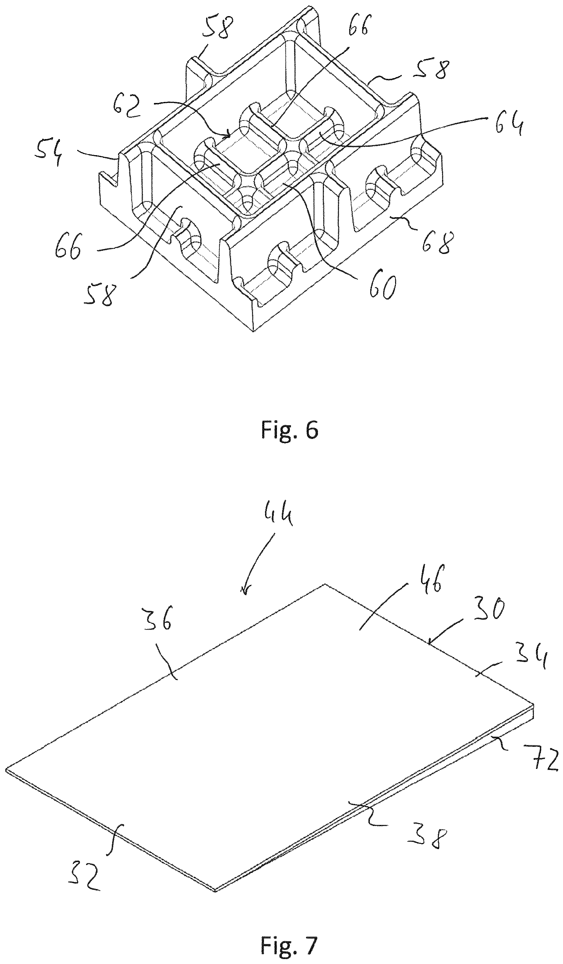

Um auch in den einzelnen Verformungsfeldern 60 der Laufgangauflage 28 eine erhöhte Stabilität zu verleihen, kann in zumindest einem Teil der Verformungsfelder eine in Fig. 6 anhand des dort dargestellten Verformungsfeldes 60 deutlich erkennbare Versteifungsstruktur 62 vorgesehen sein. Die Versteifungsstruktur 62 umfasst einen im Wesentlichen parallel zu den ersten Auflagestegen 54 und beispielsweise mittig zwischen diesen verlaufenden ersten Versteifungssteg 64 und zwei im Wesentlichen parallel zu den beiden zweiten Auflagestegen 58 verlaufende zweite Versteifungsstege 66. Diese können zwischen den beiden zweiten Auflagestegen 58 beispielsweise derart positioniert sein, dass die beiden zweiten Versteifungsstege 66 zueinander und zu dem jeweils unmittelbar benachbarten zweiten Auflagesteg 58 näherungsweise den gleichen Abstand aufweisen. Der erste Versteifungssteg 64 und die beiden zweiten Versteifungsstege 66 unterteilen das Verformungsfelde 60 der Figur 6 in sechs, bevorzugt im Wesentlichen gleich große, Abschnitte, welche jeweils eine quadratische Umfangskontur aufweisen können.

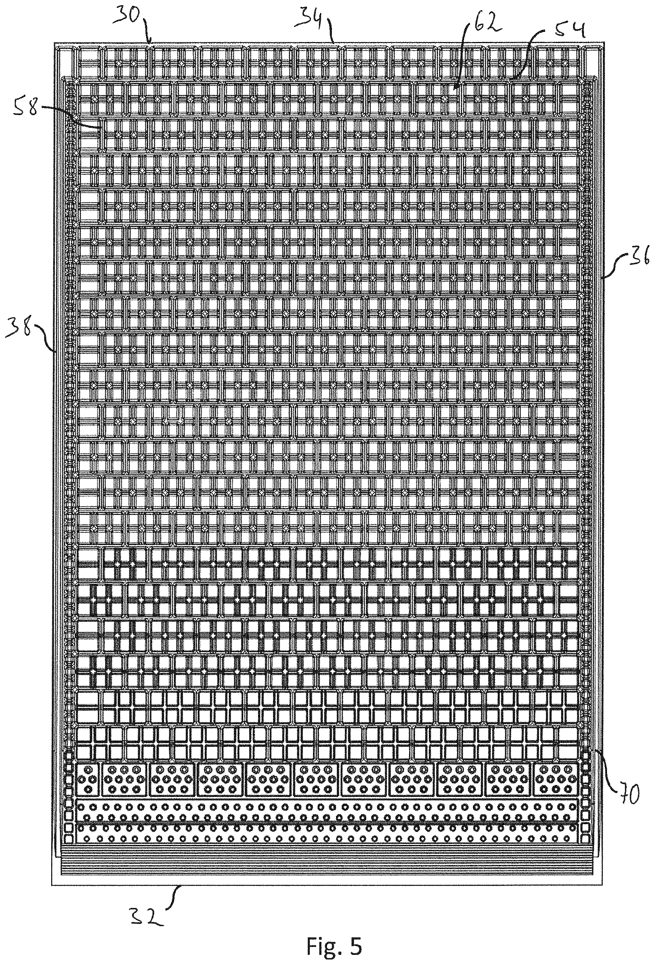

Wie in Fig. 6 deutlich zu erkennen ist, ist die Vorsprungshöhe der ersten und zweiten Versteifungsstege 64, 66 bzw. der Versteifungsstruktur 62 über den plattenartigen Bereich 68 des Auflagekörpers 30 geringer, als die Vorsprungshöhe der ersten und zweiten Auflagestege 54, 58. Beispielsweise kann vorgesehen sein, dass in der Auflagekörper-Längsrichtung A_{L} die Versteifungsstruktur 62 eine im Wesentlichen gleichbleibende Vorsprungshöhe vom plattenartigen Bereich 68 in Richtung zur Auflageseite 48 hin aufweist, während, wie vorangehend bereits beschrieben, zum Bereitstellen der keilartigen Struktur der Laufgangauflage 28 die Vorsprungshöhe der ersten und zweiten Auflagestege 54, 58 in Richtung zum ersten Auflagekörper-Seitenrandbereich 32 hin abnimmt. Dies kann beispielsweise dazu führen, dass, wie in Fig. 5 erkennbar, in einem dem zweiten Auflagekörper-Seitenrandbereich 32 nahen Zwischenraum 56 bzw. mehreren derartigen Zwischenräumen 56 keine Versteifungsstruktur vorgesehen ist, da in einem bzw. in diesen Zwischenräumen 56 bzw. den darin gebildeten Verformungsfeldern 60 die diese umgrenzenden ersten und zweiten Auflagestege 54, 58 bereits eine vergleichsweise geringe Vorsprungshöhe vom plattenartigen Abschnitt 68 des Auflagekörpers 30 aufweisen und somit die Gefahr bestehen würde, dass auch die in einem derartigen Verformungsfeld 60 möglicherweise dann vorgesehenen Versteifungsstege auf dem Laufganguntergrund 12 zumindest bei bereits geringer Belastung durch ein Tier aufstehen würden und somit zu einer übermäßigen Versteifung führen würden. In einem Großteil der Verformungsfelder 60, also mehr als der Hälfte bzw. mehr als drei Viertel der Verformungsfelder 60, ist jedoch eine Versteifungsstruktur 62 vorgesehen. Durch das Weglassen der Versteifungsstrukturen in derartigen Verformungsfeldern 60 wird dafür gesorgt, dass im Wesentlichen die gesamte Auflagefläche 50 durch die ersten und zweiten Auflagestege 54, 58 und eine die gesamte Laufgangauflage 58 entlang der Auflagekörper-Seitenrandbereiche 32, 34 und der Auflagekörper-Längsrandbereiche 36, 38 umgrenzende Randstegstruktur 70 bereitgestellt ist.

Bei der vorangehend mit Bezug auf die Fig. 3 bis 6 beschriebenen Ausgestaltungsform der Laufgangauflage 28 ist der Auflagekörper 30 mit der daran vorgesehenen Auflageformation 52 und insbesondere auch den Versteifungsstrukturen 62 als integraler Körper, beispielsweise aus Gummimaterial oder dergleichen, bereitgestellt. Bei der in Fig. 7 dargestellten alternativen Ausgestaltungsart kann eine derartige Laufgangauflage 28 im Wesentlichen mit zwei Lagen bereitgestellt sein. Eine der Lagen ist durch den beispielsweise plattenartig und mit im Wesentlichen konstanter Dicke ausgebildeten Auflagekörper 30 bereitgestellt, welcher auch die Tierauftrittsfläche 46 an der Tierauftrittsseite 44 bereitstellt. Die andere der Lagen ist durch einen Auflageformationskörper 72 bereitgestellt, auf welchem der Auflagekörper 30 aufliegt und welcher die verschiedenen Auflagestege und in wenigstens einem Teil der von diesen umgrenzten Verformungsfelder vorgesehenen Versteifungsstrukturen sowie auch die Randstegstruktur 70 bereitstellen kann. Ein derartiger Auflageformationskörper 72 kann gleichermaßen einen plattenartigen Abschnitt aufweisen, auf welchem der Auflagekörper 30 aufliegt und welcher an der dem Laufganguntergrund 12 zugewandten Seite die verschiedenen Auflagestege und Versteifungsstege trägt. Sowohl der Auflagekörper 30, als auch der Auflageformationskörper 72 können dabei aus elastischem, verformbarem Material, beispielsweise Gummimaterial, gebildet sein.

## Patentansprüche

1. Laufgangauflage für einen Laufgang in einem Tierstall, wobei der Laufgang (10) einen Laufganguntergrund (12) mit wenigstens einem in einer Laufgang-Längsrichtung (L_{L}) sich erstreckenden Laufgangbereich (16, 18) mit einem an einen Ableitrinnenbereich (14) angrenzenden ersten Laufgangbereich-Seitenrandbereich (20, 22) und einem vorzugsweise an einen Tieraufenthaltsbereich angrenzenden zweiten Laufgangbereich-Seitenrandbereich (24, 26) aufweist, wobei die Laufgangauflage (28) einen Auflagekörper (30) mit einem im Wesentlichen in einer Auflagekörper-Querrichtung (A_{Q}) sich erstreckenden ersten Auflagekörper-Seitenrandbereich (32) und einem im Wesentlichen in der Auflagekörper-Querrichtung (A_{Q}) sich erstreckenden zweiten Auflagekörper-Seitenrandbereich (34) sowie zwischen den Auflagekörper-Seitenrandbereichen (32, 34) im Wesentlichen in einer Auflagekörper-Längsrichtung (A_{L}) sich erstreckenden Auflagekörper-Längsrandbereichen (36, 38) aufweist, wobei der Auflagekörper (30) an einer Tierauftrittsseite (44) eine Tierauftrittsfläche (46) aufweist und an einer von der Tierauftrittsseite (44) abgewandten Auflageseite (48) des Auflagekörpers (36) eine Auflageformation (52) mit einer Auflagefläche (50) zur Auflage auf einem Laufgangbereich (16, 18) vorgesehen ist, wobei ein Abstand der Auflagefläche (50) von der Tierauftrittsfläche (46) vom ersten Auflagekörper-Seitenrandbereich (32) zum zweiten Auflagekörper-Seitenrandbereich (34) zunimmt, wobei die Auflageformation (52) eine Mehrzahl von mit Abstand zueinander sich erstreckenden ersten Auflagestegen (54) umfasst, wobei an wenigstens einem Teil der ersten Auflagestege (54) ein Teil der Auflagefläche (50) bereitgestellt ist, wobei eine Mehrzahl der ersten Auflagestege (54) sich zwischen den Auflagekörper-Längsrandbereichen (36, 38) diese miteinander verbindend erstreckt, wobei in zwischen einander benachbarten ersten Auflagestegen (54) gebildeten Zwischenräumen (56) eine Mehrzahl von zu den ersten Auflagestegen (54) quer verlaufenden zweiten Auflagestegen (58) vorgesehen ist und an wenigstens einem Teil der zweiten Auflagestege (58) ein Teil der Auflagefläche (50) bereitgestellt ist, **dadurch gekennzeichnet, dass** die ersten Auflagestege (54) sich im Wesentlichen in der Auflagekörper-Querrichtung (A_{Q}) erstrecken, dass die zweiten Auflagestege (58) sich im Wesentlichen in der Auflagekörper-Längsrichtung (A_{L}) erstrecken, und dass in einander benachbarten Zwischenräumen (56) vorgesehene zweite Auflagestege (58) zueinander in einer Erstreckungsrichtung der ersten Auflagestege (54) versetzt sind.

2. Laufgangauflage nach Anspruch 1,
**dadurch gekennzeichnet, dass** an jedem ersten Auflagesteg (54) ein Teil der Auflagefläche (50) bereitgestellt ist, oder/und dass an jedem zweiten Auflagesteg (58), ein Teil der Auflagefläche (50) bereitgestellt ist.

3. Laufgangauflage nach Anspruch 1 oder 2,
**dadurch gekennzeichnet, dass** die zweiten Auflagestege (58) sich im Wesentlichen orthogonal zu den ersten Auflagestegen (54) erstrecken.

4. Laufgangauflage nach einem der vorangehenden Ansprüche,
**dadurch gekennzeichnet, dass** in einander benachbarten Zwischenräumen (56) angeordnete zweite Auflagestege (58) zu in der Erstreckungsrichtung der ersten Auflagestege (54) benachbarten zweiten Auflagestegen (58) den gleichen Abstand aufweisen.

5. Laufgangauflage nach Anspruch 4,
**dadurch gekennzeichnet, dass** im Wesentlichen alle zweiten Auflagestege (58) zu in der Erstreckungsrichtung der ersten Auflagestege (54) benachbarten zweiten Auflagestegen (58) den gleichen Abstand aufweisen, oder/und dass in einander benachbarten Zwischenräumen (56) angeordnete zweite Auflagestege (58) zueinander um die Hälfte des Abstandes zwischen in der Erstreckungsrichtung der ersten Auflagestege (54) benachbarten zweiten Auflagestegen (58) versetzt sind, oder/und dass in jedem zweiten Zwischenraum (56) angeordnete zweite Auflagestege (58) in einer Erstreckungsrichtung der zweiten Auflagestege (58) quer zur Erstreckungsrichtung der ersten Auflagestege (54) im Wesentlichen auf geradlinig sich erstreckenden Auflagesteglinien (N) liegen und sich in Richtung der Auflagesteglinien (N) bevorzugt sich derart erstrecken, dass nur in einem von zwei benachbarten von einer der sich geradlinig erstreckenden Auflagesteglinien (N) durchlaufen Zwischenräumen (56) einer der zweiten Auflagestege (58) auf der einen der sich geradlinig erstreckenden Auflagesteglinien (N) liegt.

6. Laufgangauflage nach einem der vorangehenden Ansprüche,
**dadurch gekennzeichnet, dass** im Wesentlichen alle ersten Auflagestege (54) zu dazu benachbarten ersten Auflagestegen (54) im Wesentlichen den gleichen Abstand aufweisen.

7. Laufgangauflage nach einem der vorangehenden Ansprüche,
**dadurch gekennzeichnet, dass** jeweils zwei einander benachbarte erste Auflagestege (54) und zwei einander benachbarte zweite Auflagestege (58) zur Auflageseite (48) offene, vorzugsweise rechteckige, Verformungsfelder (60) begrenzen, und besonders bevorzugt **dadurch gekennzeichnet, dass** in wenigstens einem Teil der Verformungsfelder (60), vorzugsweise der Mehrzahl der Verformungsfelder (60), am meisten bevorzugt jedem Verformungsfeld (60), eine Versteifungsstruktur (62) vorzugsweise mit wenigstens einem Versteifungssteg (64, 66) vorgesehen ist.

8. Laufgangauflage nach Anspruch 7,
**dadurch gekennzeichnet, dass** die Versteifungsstruktur (62) wenigstens einen zwischen den beiden ein zugeordnetes Verformungsfeld (60) begrenzenden zweiten Auflagestegen (58) verlaufenden, vorzugsweise an diese anschließenden ersten Versteifungssteg (64) umfasst, oder/und dass die Versteifungsstruktur (62) wenigstens einen, vorzugsweise zwei zwischen den beiden ein zugeordnetes Verformungsfeld (60) begrenzenden ersten Auflagestegen (54) verlaufende, vorzugsweise an diese anschließende zweite Versteifungsstege (66) umfasst.

9. Laufgangauflage nach Anspruch 8,
**dadurch gekennzeichnet, dass** der wenigstens eine erste Versteifungssteg (64) sich im Wesentlichen parallel zu den das zugeordnete Verformungsfeld (60) begrenzenden ersten Auflagestegen (54) erstreckt, oder/und dass der wenigstens eine zweite Versteifungssteg (66) sich im Wesentlichen parallel zu den das zugeordnete Verformungsfeld (60) begrenzenden zweiten Auflagestegen (58) erstreckt.

10. Laufgangauflage nach einem der Ansprüche 7-9,
**dadurch gekennzeichnet, dass** an wenigstens einem Versteifungssteg (64, 66) der Versteifungsstruktur (62), vorzugsweise an jedem Versteifungssteg (64, 66), kein Teil der Auflagefläche (50) gebildet ist.

11. Laufgangauflage nach einem der vorangehenden Ansprüche,
**dadurch gekennzeichnet, dass** an jedem Auflagekörper-Längsrandbereich (36, 38) ein vorzugsweise schwalbenschwanzartiges Eingriffsprofil (40, 42) zum Eingriff mit einem Eingriffsprofil (42, 40) einer unmittelbar benachbart anzuordnenden Laufgangauflage (28) vorgesehen ist.

12. Laufgangauflage nach einem der vorangehenden Ansprüche,
**dadurch gekennzeichnet, dass** wenigstens der Auflagekörper (30) elastisch verformbar ist, oder/und dass der Auflagekörper (30) oder/und die Auflageformation (52) mit vorzugsweise durch Recycling gewonnenem Gummimaterial aufgebaut ist, oder/und das in einen die Tierauflagefläche (44) bereitstellenden Bereich des Auflagekörpers (30) haftungsverbessernde Partikel, vorzugsweise Korundmaterial, in das Aufbaumaterial des Auflagekörpers (30) eingebettet sind.

13. Laufgangauflage nach einem der vorangehenden Ansprüche,
**dadurch gekennzeichnet, dass** mehr als die Hälfte der ersten Auflagestege (54) sich zwischen den Auflagekörper-Längsrandbereichen (36, 38) erstreckt.

14. Laufgangauflage nach einem der Ansprüche 1-12,
**dadurch gekennzeichnet, dass** die Auflageformation (52) an wenigstens einem von dem Auflagekörper (30) getrennt ausgebildeten Auflageformationskörper (72) bereitgestellt ist, vorzugsweise wobei der Auflageformationskörper (72) im Wesentlichen orthogonal in der Auflagekörper-Längsrichtung (A_{L}) keilartig ausgebildet ist, oder dass der Auflagekörper (30) mit der Auflageformation (52) einstückig ausgebildet ist.

15. Laufgang für einen Tierstall, umfassend einen Laufganguntergrund (12) mit wenigstens einem in einer Laufgang-Längsrichtung (L_{L}) sich erstreckenden Laufgangbereich (16, 18) mit einem an einen Ableitrinnenbereich (14) angrenzenden ersten Laufgangbereich-Seitenrandbereich (20, 22) und einem vorzugsweise an einen Tieraufenthaltsbereich angrenzenden zweiten Laufgangbereich-Seitenrandbereich (24, 26), wobei auf wenigstens einem Laufgangbereich (16, 18) wenigstens eine Laufgangauflage (28) nach einem der vorangehenden Ansprüche derart positioniert ist, dass der erste Auflagekörper-Seitenrandbereich (32) über dem ersten Laufgangbereich-Seitenrandbereich (20, 22) positioniert ist und der zweite Auflagekörper-Seitenrandbereich (34) über dem zweiten Laufgangbereich-Seitenrandbereich (24, 26) positioniert ist.

## Claims

1. A walkway support for a walkway in an animal stable, wherein the walkway (10) has a walkway base (12) with at least one walkway region (16, 18) extending in a walkway longitudinal direction (L_{L}) with a first walkway region side edge region (20, 22) adjoining a discharge trough region (14) and a second walkway region side edge region (24, 26) preferably adjoining an animal accommodation region, wherein the walkway support (28) has a support body (30) with a first support body side edge region (32) extending substantially in a support body transverse direction (A_{Q}) and a second support body side edge region (34) extending substantially in the support body transverse direction (A_{Q}) and support body longitudinal edge regions (36, 38) extending between the support body side edge regions (32, 34) substantially in a support body longitudinal direction (A_{L}), wherein the support body (30) has an animal stepping surface (46) on an animal stepping side (44) and a support formation (52) with a support surface (50) on a support side (48) of the support body (36) facing away from the animal stepping side (44) for support on a walkway region (16, 18), wherein a distance of the support surface (50) from the animal stepping surface (46) increases from the first support body side edge region (32) to the second support body side edge region (34), wherein the support formation (52) comprises a plurality of spaced apart first support webs (54), wherein a portion of the support surface (50) is provided on at least a portion of the first support webs (54), wherein a plurality of the first support webs (54) extend between the support body longitudinal edge regions (36, 38) interconnecting them, wherein a plurality of second support webs (58) extending transversely to the first support webs (54) are provided in spaces (56) formed between adjacent first support webs (54), and a portion of the support surface (50) is provided on at least a portion of the second support webs (58), **characterized in that** the first support webs (54) extend substantially in the support body transverse direction (A_{Q}), **in that** the second support webs (58) extend substantially in the support body longitudinal direction (A_{L}), and **in that** second support webs (58) provided in mutually adjacent intermediate spaces (56) are offset from one another in a direction in which the first support webs (54) extend.

2. The walkway support according to claim 1,
**characterized in that** a part of the support surface (50) is provided on each first support web (54) or/and **in that** a part of the support surface (50) is provided on each second support web (58).

3. The walkway support according to claim 1 or 2,
**characterized in that** the second support webs (58) extend substantially orthogonally to the first support webs (54).

4. The walkway support according to one of the preceding claims,
**characterized in that** second support webs (58) arranged in mutually adjacent intermediate spaces (56) are at the same distance from second support webs (58) adjacent in the direction of extension of the first support webs (54).

5. The walkway support according to claim 4,
**characterized in that** substantially all second support webs (58) are at the same distance from second support webs (58) adjacent in the direction of extension of the first support webs (54), or/and **in that** second support webs (58) arranged in mutually adjacent intermediate spaces (56) are offset from one another by half the distance between second support webs (58) adjacent in the direction of extension of the first support webs (54), or/and **in that** second support webs (58) arranged in each second intermediate space (56) lie in a direction of extension of the second support webs (58) transversely to the direction of extension of the first support webs (54) substantially on support web lines (N) extending in a straight line and preferably extend in the direction of the support web lines (N) in such a way that only in one of two adjacent intermediate spaces (56) traversed by one of the straight extending support web lines (N) one of the second support webs (58) lies on the one of the straight extending support web lines (N).

6. The walkway support according to one of the preceding claims,
**characterized in that** substantially all first support webs (54) are at substantially the same distance from first support webs (54) adjacent thereto.

7. The walkway support according to one of the preceding claims,
**characterized in that** in each case two mutually adjacent first support webs (54) and two mutually adjacent second support webs (58) define deformation fields (60) which are open towards the support side (48) and are preferably rectangular, and particularly preferably **characterized in that** in at least a part of the deformation fields (60), preferably the majority of the deformation fields (60), most preferably each deformation field (60), a stiffening structure (62) is provided, preferably with at least one stiffening web (64, 66).

8. The walkway support according to claim 7,
**characterized in that** the stiffening structure (62) comprises at least one first stiffening web (64) extending between the two second support webs (58) delimiting an associated deformation field (60), preferably adjoining the latter, or/and **in that** the stiffening structure (62) comprises at least one, preferably two, second stiffening webs (66) running between the two first support webs (54) delimiting an associated deformation field (60), preferably adjoining the latter.

9. The walkway support according to claim 8,
**characterized in that** the at least one first stiffening web (64) extends substantially parallel to the first support webs (54) delimiting the associated deformation field (60), or/and **in that** the at least one second stiffening web (66) extends substantially parallel to the second support webs (58) delimiting the associated deformation field (60).

10. The walkway support according to any one of claims 7-9,
**characterized in that** no part of the support surface (50) is formed on at least one stiffening web (64, 66) of the stiffening structure (62), preferably on each stiffening web (64, 66).

11. The walkway support according to one of the preceding claims,
**characterized in that** a preferably dovetail-like engagement profile (40, 42) is provided on each support body longitudinal edge region (36, 38) for engagement with an engagement profile (42, 40) of a walkway support (28) to be arranged immediately adjacent thereto.

12. The walkway support according to one of the preceding claims,
**characterized in that** at least the support body (30) is elastically deformable, or/and in that the support body (30) or/and the support formation (52) is built up with rubber material preferably obtained by recycling, or/and **in that** adhesion-improving particles, preferably corundum material, are embedded in the build-up material of the support body (30) in a region of the support body (30) providing the animal stepping surface (44).

13. The walkway support according to one of the preceding claims,
**characterized in that** more than half of the first support webs (54) extend between the support body longitudinal edge regions (36, 38).

14. The walkway support according to any one of claims 1-12,
**characterized in that** the support formation (52) is provided on at least one support formation body (72) formed separately from the support body (30), preferably wherein the support formation body (72) is wedge-shaped substantially orthogonally in the support body longitudinal direction (A_{L}), or **in that** the support body (30) is formed integrally with the support formation (52).

15. The walkway for an animal stable, comprising a walkway base (12) with at least one walkway region (16, 18) extending in a walkway longitudinal direction (L_{L}) with a first walkway region side edge region (20, 22) adjacent to a discharge trough region (14) and a second walkway region side edge region (24, 26) preferably adjacent to an animal accommodation region, wherein on at least one walkway region (16, 18) at least one walkway support (28) according to one of the preceding claims is positioned such that the first support body side edge region (32) is positioned above the first walkway region side edge region (20, 22) and the second support body side edge region (34) is positioned above the second walkway region side edge region (24, 26).

## Revendications

1. Support de couloir de circulation pour un couloir de circulation dans une étable, dans lequel le couloir de circulation (10) comprend une base de couloir de circulation (12) avec au moins une zone de couloir de circulation (16, 18) s'étendant dans une direction longitudinale de couloir de circulation (L_{L}) avec une première zone de bord latéral de zone de couloir de circulation (20, 22) adjacente à une zone de gouttière d'évacuation (14) et une deuxième zone de bord latéral de zone de couloir de circulation (24, 26) de préférence adjacente à une zone de séjour d'animal, dans lequel le support de couloir de circulation (28) présente un corps de support (30) avec une première zone de bord latéral de corps de support (32) s'étendant essentiellement dans une direction transversale de corps de support (A_{Q}) et une deuxième zone de bord latéral de corps de support (34) s'étendant essentiellement dans la direction transversale de corps de support (A_{Q}) ainsi que, entre les zones de bord latéral de corps de support (32, 34) des zones de bord longitudinal de corps de support (36, 38) s'étendant essentiellement dans une direction longitudinale (A_{L}) du corps de support, dans lequel le corps de support (30) présente sur un côté de marche d'animal (44) une surface de marche d'animal (46) et sur un côté de support (48) du corps de support (36) opposé au côté de marche d'animal (44) une formation de support (52) avec une surface de support (50) pour le support sur une zone de couloir de circulation (16, 18), dans lequel une distance de la surface de support (50) par rapport à la surface de marche d'animal (46) augmente de la première zone de bord latéral du corps de support (32) à la deuxième zone de bord latéral de corps de support (34), dans lequel la formation de support (52) comprend une pluralité de premières traverses de support (54) s'étendant à distance les unes des autres, dans lequel une partie de la surface de support (50) est prévue sur au moins une partie des premières traverses de support (54), dans lequel une pluralité des premières traverses de support (54) s'étend entre les zones de bord longitudinal de corps de support (36, 38) en reliant celles-ci entre elles, dans lequel une pluralité de deuxièmes traverses de support (58) s'étendant transversalement aux premières traverses de support (54) est prévue dans des espaces intermédiaires (56) formés entre des premières traverses de support (54) voisines les unes des autres, et une partie de la surface de support (50) étant prévue sur au moins une partie des deuxièmes traverses de support (58), **caractérisé, en ce que** les premières traverses de support (54) s'étendent essentiellement dans la direction transversale du corps de support (A_{Q}), **en ce que** les deuxièmes traverses de support (58) s'étendent essentiellement dans la direction longitudinale du corps de support (A_{L}), et **en ce que** des deuxièmes traverses de support (58) prévues dans des espaces intermédiaires (56) voisins les uns des autres sont décalées les unes par rapport aux autres dans une direction d'extension des premières traverses de support (54).

2. Support de couloir de circulation selon la revendication 1,
**caractérisé en ce qu**'une partie de la surface de support (50) est prévue sur chaque première traverse de support (54), ou/et en ce qu'une partie de la surface de support (50) est prévue sur chaque deuxième traverse de support (58).

3. Support de couloir de circulation selon la revendication 1 ou 2,
**caractérisé en ce que** les deuxièmes traverses de support (58) s'étendent essentiellement orthogonalement par rapport aux premières traverses de support (54).

4. Support de couloir de circulation selon l'une des revendications précédentes,
**caractérisé en ce que** des deuxièmes traverses de support (58) disposées dans des espaces intermédiaires (56) voisins les uns des autres présentent le même écartement par rapport à des deuxièmes traverses de support (58) voisines dans la direction d'extension des premières traverses de support (54).

5. Support de couloir de circulation selon la revendication 4,
**caractérisé en ce que** essentiellement toutes les deuxièmes traverses de support (58) présentent la même distance par rapport aux deuxièmes traverses de support (58) voisines dans le sens d'extension des premières traverses de support (54), ou/et **en ce que** des deuxièmes traverses de support (58) disposées dans des espaces intermédiaires (56) voisins les uns des autres sont décalées les unes par rapport aux autres de la moitié de la distance entre les deuxièmes traverses de support (58) voisines dans le sens d'extension des premières traverses de support (54), ou/et **en ce que** des deuxièmes traverses de support (58) disposées dans chaque deuxième espace intermédiaire (56) se trouvent dans une direction d'extension des deuxièmes traverses de support (58) transversalement à la direction d'extension des premières traverses de support (54) essentiellement sur des lignes de traverses de support (N) s'étendant de manière rectiligne et s'étendent de préférence dans la direction des lignes de traverses de support (N) de telle sorte, que seulement dans l'un de deux espaces intermédiaires (56) voisins traversés par l'une des lignes de support (N) s'étendant de manière rectiligne, l'une des deuxièmes traverses de support (58) se trouve sur l'une des lignes de support (N) s'étendant de manière rectiligne.

6. Support de couloir de circulation selon l'une des revendications précédentes,
**caractérisé en ce que** essentiellement toutes les premières traverses de support (54) présentent essentiellement la même distance par rapport aux premières traverses de support (54) qui leur sont voisines.

7. Support de couloir de circulation selon l'une des revendications précédentes,
**caractérisé en ce que** deux premières traverses de support (54) voisines l'une de l'autre et deux deuxièmes traverses de support (58) voisines l'une de l'autre délimitent respectivement des champs de déformation (60), de préférence rectangulaires, ouverts vers le côté de support (48), et de manière particulièrement préférée, **caractérisé en ce que** dans au moins une partie des champs de déformation (60), de préférence la majorité des champs de déformation (60), de préférence chaque champ de déformation (60), il est prévu une structure de renforcement (62), de préférence avec au moins une traverse de renforcement (64, 66).

8. Support de couloir de circulation selon la revendication 7,
**caractérisé en ce que** la structure de renforcement (62) comprend au moins une première traverse de renforcement (64) s'étendant entre les deux deuxièmes traverses de support (58) délimitant un champ de déformation (60) associé, et se raccordant de préférence à celles-ci, ou/et **en ce que** la structure de renforcement (62) comprend au moins une, de préférence deux deuxièmes traverses de renforcement (66) s'étendant entre les deux premières traverses de support (54) délimitant un champ de déformation (60) associé, et de préférence se raccordant à celles-ci.

9. Support de couloir de circulation selon la revendication 8,
**caractérisé en ce que** ledit au moins une première traverse de renforcement (64) s'étend essentiellement parallèlement aux premières traverses de support (54) délimitant le champ de déformation (60) associé, ou/et **en ce que** ledit au moins une deuxième traverse de renforcement (66) s'étend essentiellement parallèlement aux deuxièmes traverses de support (58) délimitant le champ de déformation (60) associé.

10. Support de couloir de circulation selon l'une des revendications 7 à 9,
**caractérisé en ce qu**'aucune partie de la surface de support (50) n'est formée sur au moins une traverse de renforcement (64, 66) de la structure de renforcement (62), de préférence sur chaque traverse de renforcement (64, 66).

11. Support de couloir de circulation selon l'une des revendications précédentes,
**caractérisé en ce qu**'il est prévu sur chaque zone de bord longitudinal de corps de support (36, 38) un profil d'engagement (40, 42) de préférence en queue d'aronde pour l'engagement avec un profil d'engagement (42, 40) d'un support de couloir de circulation (28) à disposer directement à proximité.

12. Support de couloir de circulation selon l'une des revendications précédentes,
**caractérisé en ce qu**'au moins le corps de support (30) est déformable élastiquement, ou/et en ce que le corps de support (30) ou/et la formation de support (52) est constitué d'un matériau en caoutchouc obtenu de préférence par recyclage, ou/et en ce que des particules améliorant l'adhérence, de préférence un matériau en corindon, sont incorporées dans le matériau de construction du corps de support (30) dans une zone du corps de support (30) fournissant la surface de marche d'animal (44).

13. Support de couloir de circulation selon l'une des revendications précédentes,
**caractérisé en ce que** plus de la moitié des premières traverses de support (54) s'étend entre les zones de bord longitudinal de corps de support (36, 38).

14. Support de couloir de circulation selon l'une des revendications 1 à 12,
**caractérisé en ce que** la formation de support (52) est prévue sur au moins un corps de formation de support (72) réalisé séparément du de support (30), de préférence dans lequel le corps de formation de support (72) est réalisé en forme de cale essentiellement orthogonal dans la direction longitudinale du corps de support (A_{L}), ou **en ce que** le corps de support (30) est réalisé d'un seul tenant avec la formation de support (52).

15. Couloir de circulation pour une étable, comprenant une base de couloir de circulation (12) avec au moins une zone de couloir de circulation (16, 18) s'étendant dans une direction longitudinale de couloir de circulation (L_{L}) avec une première zone de bord latéral zone de couloir de circulation (20, 22) adjacente à une zone de gouttière d'évacuation (14) et une deuxième zone de bord latéral de zone de couloir de circulation (24, 26) adjacente de préférence à une zone de séjour d'animaux, dans lequel au moins un support de couloir de circulation (28) selon l'une des revendications précédentes est positionné sur au moins une zone de couloir de circulation (16, 18) de telle sorte que la première zone de bord latéral de corps de support (32) est positionnée au-dessus de la première zone de couloir de circulation (20, 22) et la deuxième zone de bord latéral de corps de support (34) est positionnée au-dessus de la deuxième zone de bord latéral de zone de couloir de circulation (24, 26).
